# EUROPEAN PATENT APPLICATION

(11) **EP 2 143 535 A1**
(43) Date of publication of application: **13.01.2010**
(21) Application number: 09165243.8
(22) Date of filing: 10.07.2009
(51) Int. Cl.: B27N 7/00, B29C 63/04

(54) **Method of producing panels of wood or similar**

(30) Priority: 11.07.2008 IT BO20080440
(71) Applicant: BIESSE S.p.A., 61100 Pesaro (IT)
(72) Inventor: Bernardi, Paolo, 47841 Cattolica (IT)
(74) Representative: Jorio, Paolo

(57) **Abstract**

A panel (2) of wood or similar, having a filling structure (5) between two parallel, substantially flat sheets (3) of wood or similar, is produced by heating the sheets (3) and/or the filling structure (5); applying glue or similar to the heated sheets (3) and/or filling structure (5); and assembling the sheets (3) and the filling structure (5).

## Description

The present invention relates to a method of producing panels of wood or similar.

In wood panel manufacturing, a panel is known comprising two parallel, substantially flat sheets of wood or similar; and a filling structure normally defined by a honeycomb paper structure placed between the sheets.

The panel is normally made by applying glue or similar to the sheets and/or filling structure; assembling the sheets and filling structure; and stabilizing the glue by either heating or storing the newly formed panel.

The above known method has several drawbacks, mainly on account of the relatively long time involved in heating or storing the panel to stabilize the glue.

It is an object of the present invention to provide a method of producing panels of wood or similar, designed to eliminate the above drawbacks.

According to the present invention, there is provided a method of producing panels of wood or similar, as claimed in the accompanying Claims.

A non-limiting embodiment of the present invention will be described by way of example with reference to the accompanying drawings, in which:
Figure 1 shows, schematically, a preferred> embodiment of the system according to the present invention;
Figure 2 shows a cross section of a panel produced on the Figure 1 system.

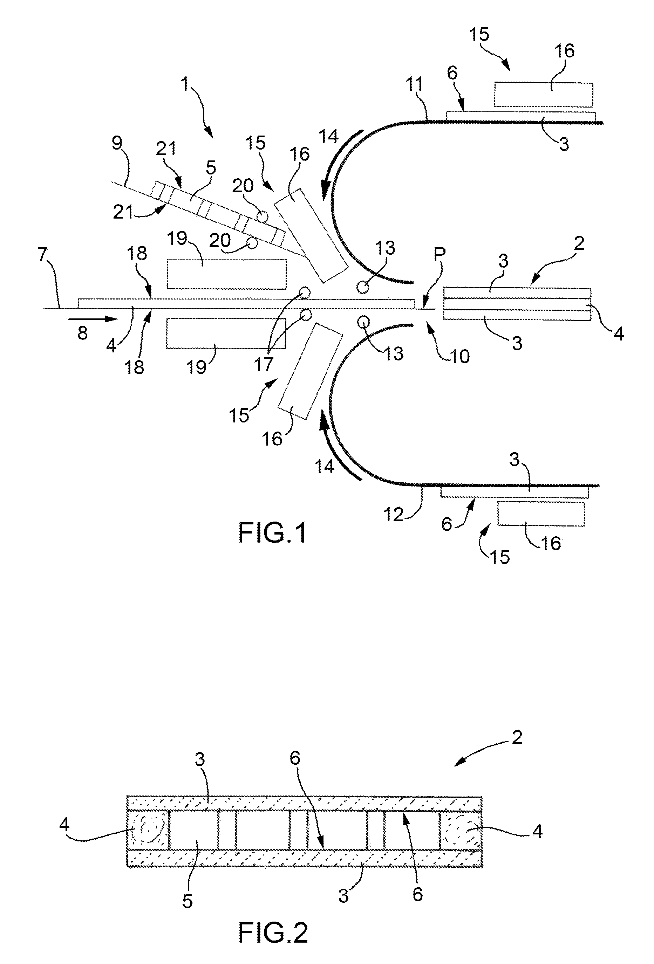

With reference to Figures 1 and 2, number 1 indicates as a whole a system for producing panels 2 of wood or similar. In the example shown, each panel 2 is substantially rectangular, comprises two parallel, substantially flat sheets 3 made of wood or similar and, in the example shown, made of materials derived from wood, such as so-called MDF (Medium Density Foam) or HDF (High Density Foam), is bounded laterally by two ribs 4 of wood or similar fitted parallel to each other between sheets 3, and comprises a filling structure 5 (in the example shown, a honeycomb filling structure made, for example, of cardboard) placed between sheets 3 and ribs 4 and glued to the inner surfaces 6 of sheets 3.

System 1 comprises a known first feed device 7 defining a substantially horizontal supporting surface P, and which feeds pairs of parallel ribs 4 successively along surface P in a horizontal direction 8.

System 1 also comprises a known second feed device 9, which extends over surface P, is connected to device 7 at a joining station 10, and feeds filling structures 5 successively to station 10 and between relative ribs 4.

System 1 also comprises two further known feed devices 11, 12, which are connected to devices 7 and 9 at station 10, extend over and under surface P respectively, and feed respective successions of sheets 3 to station 10.

Each device 11, 12 cooperates with a respective applicator 13 mounted upstream from station 10 in the travelling direction 14 of sheets 3 and for applying glue or similar to surfaces 6 of relative sheets 3, and with a respective heating device 15 mounted upstream from applicator 13 in direction 14 and for heating relative sheets 3 before the glue is applied.

In the example shown, device 15 comprises two known heating units 16 mounted successively in direction 14 and facing surfaces 6 of relative sheets 3, so as to only heat surfaces 6 to a temperature ranging between 50°C and 80°C, and preferably between 65°C and 75°C.

One of heating units 16 of each device 15 may obviously be eliminated.

Device 7 cooperates with an applicator 17 mounted upstream from station 10 in direction 8 and for applying glue or similar to the faces 18, parallel to surface P, of each rib 4, and with a heating device 19 mounted upstream from applicator 17 in direction 8 and for heating both faces 18 of each rib 4 before the glue is applied.

Device 9 cooperates with an applicator 20 mounted upstream from joining station 10 and for applying glue or similar to the main lateral faces 21 of each filling structure 5, i.e. to the faces parallel to the conveying surface of device 9.

Applicator 13 on one side and applicators 17, 20 on the other are preferably alternative. That is, glue is preferably applied to sheets 3 or to ribs 4 and filling structures 5.

In this connection, it should be pointed out that sheets 3 are still heated by respective devices 15, even when glue is applied to ribs 4 and filling structures 5.

Filling structures 5 are preferably not heated.

In a variation not shown, feed device 7, applicator 17, and heating device 19 are eliminated, and panels 2 are made without ribs 4.

In connection with the above, it should be pointed out that applicators 13, 17, 20 are designed to heat the glue to a temperature ranging between 5°C and 30°C, and preferably between 15°C and 20°C.

Operation of system 1 can be deduced easily from the above description, with no further explanation required.

By heating sheets 3 and/or ribs 4 and/or filling structures 5 before applying the glue and assembling panels 2 at joining station 10, and by heating the glue, the glue and, hence, panels 2, can be stabilized relatively quickly.

In alternative embodiments not shown, the number and/or arrangement of ribs 4 may obviously vary.

## Claims

1. Method for the production of panels (2) made of wood or the like, each panel (2) comprising two sheets (3) made of wood or the like, substantially flat and parallel to each other, and a filling structure (5) placed between the sheets (3), said method comprising the following steps:
applying glue or the like on said sheets (3) and/or on said filling structure (5); and
assembling the sheets (3) and the filling structure (5); and being **characterized in that** it further comprises the following step:
heating the sheets (3) and/or the filling structure (5) before assembling them.

2. Method according to claim 1, comprising the following steps:
applying glue or the like on said sheets (3); and heating the sheets (3) before applying the glue.

3. Method according to claim 1 or 2, wherein each sheet (3) is limited by a relative first main surface (6) contacting the filling structure (5); said method comprising the following steps:
applying glue on the surface (6) of each sheet (3); and
heating only the surface (6) of each sheet (3) before applying the glue.

4. Method according to claim 1 and comprising the following steps:
applying glue only on the filling structure (5); and
heating only the sheets (3).

5. Method according to one of the preceding claims, wherein the sheets (3) are heated at a temperature comprised between 50°C and 80°C, preferably 65-75°C.

6. Method according to one of the preceding claims, further comprising the following steps:
heating at least a stiffening rib (4); and
glueing said stiffening rib (4) between said sheets (3) and around at least a part of the filling structure (5).

7. Method according to claim 6, further comprising the following step:
applying glue or the like on the stiffening rib (4) after heating it.

8. Method according to claim 6 or 7, wherein the stiffening rib (4) is heated at a temperature comprised between 50°C and 80°C, preferably 65-75°C.

9. Method according to one of the preceding claims, further comprising the following step:
thermally conditioning the glue.

10. Method according to claim 9, wherein the glue is thermally conditioned at a temperature comprised between 5°C and 30°C, preferably 15-20°C.
